# EUROPÄISCHE PATENTANMELDUNG

(11) **EP 4 458 489 A1**
(43) Veröffentlichungstag der Anmeldung: **06.11.2024**
(21) Anmeldenummer: 24168773.0
(22) Anmeldetag: 05.04.2024
(51) Int. Cl.: B21D 28/26, B21D 37/14, B23Q 3/155

(54) **WERKZEUGKASSETTE ZUM TRAGEN VON WERKZEUGTEILEN, INSBESONDERE EINES MEHRTEILIGEN BEARBEITUNGSWERKZEUGS FÜR EINE STANZ- UND/ODER UMFORMVORRICHTUNG, KOMBINATION UND SET**

(30) Priorität: 04.05.2023 DE 102023204108
(71) Anmelder: PASS Stanztechnik AG, 95473 Creußen (DE)
(72) Erfinder: Bauer, Josef, 94255 Böbrach (DE)
(74) Vertreter: Rau, Schneck & Hübner Patentanwälte Rechtsanwälte PartGmbB

(57) **Zusammenfassung**

Eine Werkzeugkassette (1) zum Tragen von Werkzeugteilen, insbesondere eines mehrteiligen Bearbeitungswerkzeugs für eine Stanz- und/oder Umformvorrichtung, umfasst einen Grundkörper (6), ein an dem Grundkörper (6) angebrachtes erstes Tragmittel (2) zum reversibel lösbaren Aufnehmen eines ersten Werkzeugteils, und ein an dem Grundkörper (6) angebrachtes zweites Tragmittel (3) zum reversibel lösbaren Aufnehmen eines zweiten Werkzeugteils, wobei der Grundkörper (6) zweiteilig ausgebildet ist, wobei an einem ersten Grundkörperteil (15) das erste Tragmittel (2) angeordnet ist und, wobei an einem zweiten Grundkörperteil (16) das zweite Tragmittel (3) angeordnet ist.

## Beschreibung

Der Inhalt der deutschen Patentanmeldung DE 10 2023 204 108.1 wird durch Bezugnahme hierin aufgenommen.

Die Erfindung betrifft eine Werkzeugkassette zum Tragen von Werkzeugteilen, insbesondere eines mehrteiligen Bearbeitungswerkzeugs für eine Stanz- und/oder Umformvorrichtung. Ferner betrifft die Erfindung eine Kombination mit einer derartigen Werkzeugkassette. Die Erfindung betrifft auch ein Set mit einer derartigen Werkzeugkassette.

Aus der WO 2018/141 900 A1 ist eine Werkzeugkassette zum Tragen von Werkzeugteilen eines Bearbeitungswerkzeuges für eine Stanzvorrichtung bekannt. An einem Grundkörper der Werkzeugkassette sind ein erstes Tragmittel zum Aufnehmen eines Stanzstempels und ein zweites Tragmittel zum Aufnehmen einer Stanzmatrize angeordnet. Eine derartige Werkzeugkassette hat sich, insbesondere bei kleinen Stückzahlen, als wenig wirtschaftlich in der Herstellung und als aufwändig in der Instandhaltung herausgestellt.

Es ist eine Aufgabe der Erfindung, eine verbesserte Werkzeugkassette zum Tragen von Werkzeugteilen bereitzustellen, welche insbesondere besonders leicht, wirtschaftlich in der Herstellung und im Einsatz, sowie robust im Betrieb ist.

Diese Aufgabe wird durch eine Werkzeugkassette mit den Merkmalen des Anspruchs 1 gelöst. Es wurde erkannt, dass eine Werkzeugkassette zum Tragen von Werkzeugteilen, insbesondere eines mehrteiligen Bearbeitungswerkzeugs für eine Stanz- und/oder Umformvorrichtung, einen zweiteilig ausgebildeten Grundkörper aufweisen kann, wobei an einem ersten Grundkörperteil ein erstes Tragmittel zum reversibel lösbaren Aufnehmen eines ersten Werkzeugteils angeordnet ist und wobei an einem zweiten Grundkörperteil ein zweites Tragmittel zum reversibel lösbaren Aufnehmen eines zweiten Werkzeugteils angeordnet ist. Das erste Tragmittel ist vorzugsweise zum Aufnehmen eines Stanzstempels ausgebildet. Das zweite Tragmittel kann zum Aufnehmen einer Stanzmatrize ausgebildet sein. Die zweiteilige Ausbildung des Grundkörpers gewährleistet eine unkomplizierte und wirtschaftliche Herstellung und Instandhaltung der Werkzeugkassette. Die zweiteilige Ausführung ermöglicht Materialeinsparungen aufgrund verbesserter Zugänglichkeit des jeweiligen Grundkörperteils bei der Herstellung. Die gesteigerte Gestaltungsfreiheit aufgrund des zweiteiligen Aufbaus erlaubt zudem eine besonders robuste Gestaltung der Werkzeugkassette, insbesondere von Lagerstellen der Tragmittel. Durch die zweiteilige Ausbildung des Grundkörpers sind Lagerstellen vorzugsweise schwenkbarer Tragmittel einfacher zugänglich und robuster dimensionierbar. Die Werkzeugkassette ist besonders leicht, wirtschaftlich in der Herstellung und im Einsatz, sowie robust im Betrieb.

Bei dem mehrteiligen Bearbeitungswerkzeug handelt es sich vorzugsweise um ein Stanz- und/oder Umformwerkzeug. Die Werkzeugkassette kann zum Tragen eines Stanz- und/oder Umformstempels, eines Niederhalters und/oder eines Abstreifers und/oder einer Stanz- und/oder Umformmatrize ausgebildet sein. Die Werkzeugkassette ist insbesondere dazu ausgebildet, ein vollständiges Bearbeitungswerkzeug verliersicher zu bevorraten. Vorzugsweise weist die Werkzeugkassette für jedes Werkzeugteil ein separates Tragmittel auf. Die Werkzeugkassette wird auch als Werkzeughalter bezeichnet.

Die Werkzeugkassette kann zum Einsetzen in ein Werkzeugmagazin einer Stanz- und/oder Umformvorrichtung ausgebildet sein. Hierzu kann die Werkzeugkassette eine Kopplungseinrichtung zum reversibel lösbaren Verbinden mit einer Gegen-Kopplungseinrichtung eines entsprechenden Werkzeugmagazins aufweisen.

Das erste und/oder das zweite Tragmittel weisen vorzugsweise jeweils zwei Werkzeugtragarme auf. Die jeweils zwei Werkzeugtragarme können zum reversibel lösbaren Umgreifen des jeweiligen Werkzeugs ausgebildet sein. Die jeweils zwei Werkzeugtragarme können relativ zu dem Grundkörper, insbesondere unabhängig voneinander, insbesondere aufeinander zu- und voneinander weg, schwenkbar gelagert sein.

Vorzugsweise sind die jeweiligen Werkzeugtragarme in eine Verschlussstellung, insbesondere aufeinander zu, vorgespannt. Zum Bewirken der Vorspannkraft kann mindestens ein Federelement vorgesehen sein, insbesondere für jeden der Werkzeugtragarme oder ein einziges Federelement für zwei Werkzeugtragarme desselben Tragmittels. Das Federelement kann als Spiralfeder und/oder als Plattfeder und/oder als gummielastisches Element, beispielsweise als Druckfeder und/oder als Zugfeder, ausgebildet sein.

Das erste und/oder das zweite Tragmittel sind an dem Grundkörper, insbesondere an dem jeweiligen Grundkörperteil, vorzugsweise unmittelbar angebracht. Das erste und/oder das zweite Tragmittel können an dem Grundkörper beweglich, insbesondere schwenkbar, angebracht sein. Vorzugsweise sind das erste und/oder das zweite Tragmittel im Übrigen unbeweglich an dem Grundkörper festgelegt.

Gemäß einem Aspekt der Erfindung weist der Grundkörper ein Kunststoffmaterial auf, insbesondere besteht dieser daraus. Das Kunststoffmaterial kann PE, PA, insbesondere PA2200, PLA, ABS, PEEK, PET, PVA und/oder PP umfassen. Vorzugsweise ist das Kunststoffmaterial faserverstärkt, insbesondere durch Kurzfasern verstärkt. Bei einer Kollision der Werkzeugmaschine mit der Werkzeugkassette in einem Fehlerfall kann der Grundkörper somit als Opferstruktur dienen, um potentielle Schäden an der Werkzeugmaschine möglichst zu vermeiden. Ein Grundkörper aus Kunststoff ist zudem besonders leicht.

Die Werkzeugkassette kann einen Handgriff aufweisen. Vorzugsweise ist der Handgriff mit einem Verschlussteil zum Befestigen des ersten und/oder des zweiten Tragmittels an dem Grundkörper einteilig ausgebildet.

Das Gewicht der Werkzeugkassette liegt vorzugsweise in einem Bereich von 0,2 kg bis 1 kg, insbesondere von 0,5 kg bis 0,8 kg, insbesondere von 0,6 kg bis 0,7 kg, insbesondere beträgt es 0,66 kg. Ein entsprechend geringes Gewicht wird insbesondere durch die zweiteilige Ausbildung des Grundkörpers ermöglicht.

Gemäß einem Aspekt der Erfindung kann das erste Grundkörperteil mit dem zweiten Grundkörperteil montiert werden, wenn an dem ersten und/oder an dem zweiten Grundkörperteil das erste und/oder das zweite Tragmittel bereits angebracht sind. Hierdurch werden die Montage und/oder die Instandhaltung vereinfacht.

Eine Werkzeugkassette nach Anspruch 2 ist besonders wirtschaftlich und flexibel im Einsatz. Die reversibel lösbare Verbindung zwischen dem ersten und dem zweiten Grundkörperteil kann kraftschlüssig, insbesondere mittels einer Verschraubung, und/oder formschlüssig, insbesondere mittels einer Rastverbindung, ausgebildet sein. Hierdurch werden der Austausch und/oder die Reparatur von Teilen der Werkzeugkassette erleichtert. Insbesondere kann mindestens eines der Grundkörperteile durch ein Alternativ-Grundkörper ausgetauscht werden, das eine andere Beschaffenheit, insbesondere eine andere Geometrie, als das damit ausgetauschte Grundkörperteil aufweist.

Alternativ kann das erste Grundkörperteil mit dem zweiten Grundkörperteil unlösbar, insbesondere nicht zerstörungsfrei lösbar, beispielsweise stoffschlüssig, verbunden, insbesondere verklebt und/oder verschweißt, sein.

Eine Werkzeugkassette nach Anspruch 3 ist besonders robust im Betrieb. Dadurch, dass sich das mindestens eine Lagermittel über beide Grundkörperteile erstreckt, sind die darauf wirkenden Kräfte besonders gleichmäßig verteilt auf den Grundkörper übertragbar. Die auf den Grundkörper wirkende, insbesondere lokale Belastung, ist hierdurch reduziert. Vorzugsweise ist das Lagermittel des ersten Tragmittels, insbesondere der Werkzeugtragarme des ersten Tragmittels, an dem ersten Grundkörperteil und an dem zweiten Grundkörperteil angebracht.

Gemäß einem Aspekt der Erfindung ist das mindesten eine Lagermittel als Lagerbolzen ausgebildet. Vorzugsweise weist das erste und/oder das zweite Tragmittel jeweils mindestens einen Lagerbolzen, insbesondere genau einen Lagerbolzen pro Werkzeugtragarm, auf. Die beiden Lagerbolzen des zweiten Tragmittels sind vorzugsweise, insbesondere ausschließlich, an dem zweiten Grundkörperteil angebracht. Die Lagerbolzen zum schwenkbaren Lagern der Werkzeugtragarme des ersten Tragmittels können an dem ersten und an dem zweiten Grundkörperteil angebracht sein, insbesondere jeweils eine Durchgangsbohrung in dem ersten Grundkörperteil durchdringen und/oder in eine Sackloch-Bohrung des zweiten Grundkörperteils hineinragen. Die Befestigung in der Sackloch-Bohrung reduziert Kontaktkorrosion. In der Sackloch-Bohrung sind die Lagerbolzen vorzugsweise reversibel lösbar festgelegt, insbesondere mittels einer Übergangspassung oder einer Spielpassung.

Eine Werkzeugkassette nach Anspruch 4 ist besonders robust im Betrieb. Der mindestens eine Lagerbolzen, insbesondere die beiden Lagerbolzen, zum Lagern der Werkzeugtragarme des ersten Tragmittels, sind vorzugsweise starr mit dem Grundkörper, insbesondere mit dem ersten und/oder dem zweiten Grundkörperteil, verbunden. Beispielsweise kann der mindestens eine Lagerbolzen mit dem ersten Grundkörperteil kraftschlüssig, insbesondere mittels einer Übermaßpassung und/oder stoffschlüssig, insbesondere mittels einer Verklebung, verbunden sein. Hierdurch wird Kontaktkorrosion zwischen dem Lagerbolzen und dem ersten Grundkörperteil vermieden. Zudem kann hierdurch eine besonders gleichmäßige Kraftübertragung gewährleistet werden. Der mindestens eine Lagerbolzen kann mit dem Grundkörper reversibel lösbar oder unlösbar, insbesondere nicht zerstörungsfrei lösbar, verbunden sein. Die starre Verbindung des Lagermittels, insbesondere des Lagerbolzens, mit dem Grundkörper wird insbesondere gewährleistet durch eine schwenkbare Anordnung des Tragmittels, insbesondere des jeweiligen Werkzeugtragarms, relativ zu dem Lagerbolzen.

Vorzugsweise ist mindestens ein Lagerbolzen, insbesondere sind beide Lagerbolzen, zum Lagern der Werkzeugtragarme des zweiten Tragmittels schwenkbar gegenüber dem Grundkörper, insbesondere an dem zweiten Grundkörperteil, gelagert. Die Lagerbolzen können mit den Werkzeugtragarme des zweiten Tragmittels starr verbunden sein, insbesondere stoffschlüssig und/oder kraftschlüssig.

Eine Werkzeugkassette nach Anspruch 5 ist besonders robust im Betrieb. Das den Lagerkragen aufweisende Gegen-Lagermittel ist vorzugsweise an dem ersten Tragmittel angeordnet. Vorzugsweise weisen die Werkzeugtragarme das Gegen-Lagermittel auf. Zum Ausbilden des Lagerkragens kann der jeweilige Werkzeugtragarm eine Aufdickung aufweisen, insbesondere im Bereich des Kontakts mit dem Lagermittel und/oder in Richtung der Drehachse, insbesondere gegenüber einer Dicke bzw. Wandstärke des jeweiligen Werkzeugtragarms in einem Tragbereich zum Aufnehmen des jeweiligen Werkzeugteils. Insbesondere ist der jeweilige Werkzeugtragarm aus einem Blech- oder Plattenmaterial hergestellt, insbesondere gestanzt und/oder geschnitten, insbesondere lasergeschnitten. Der Lagerkragen kann durch mindestens eine, insbesondere in den jeweiligen Werkzeugtragarm eingepresste, Buchse und/oder durch mindestens eine stoffschlüssig aufgebrachte Aufdickung ausgebildet sein. Die mindestens eine Buchse wird auch als Hülse bezeichnet. Die Buchse umfasst vorzugsweise ein verschleißfestes Material, insbesondere einen Gleitlagerwerkstoff, und/oder ein rostfreies Material, insbesondere eine rostfreie Legierung, insbesondere eine Bronzelegierung, insbesondere eine Aluminium-Bronze-Legierung, beispielsweise eine Legierung der Bezeichnung Ampco, insbesondere besteht die Buchse daraus. Ein Verhältnis zwischen der Dicke des Werkzeugtragarms im Bereich der Buchse und/oder des Lagerkragens und der Dicke eines daran angrenzenden Bereichs, entlang der Drehachse, liegt vorzugsweise in einem Bereich von 1:1 bis 4:1, insbesondere von 1,2:1 bis 3:1, insbesondere von 1,5:1 bis 2,5:1, insbesondere von 1,7:1 bis 2,3:1, insbesondere beträgt es 2. Vorzugsweise ist die mindestens eine Buchse dazu ausgebildet, ein entsprechendes Verhältnis der Lagerlänge und einer Verbindungslänge mit dem Werkzeugtragarm bereitzustellen. Beispielsweise beträgt eine Verbindungslänge, insbesondere eine Einpresslänge, der Buchse 5,9 mm und eine Lagerlänge der Buchse, zum Ausbilden des Drehlagers, insbesondere zum Zusammenwirken mit dem Lagermittel, beträgt 11,8 mm. Alternativ kann der Werkzeugkragen in einem Urformverfahren, beispielsweise einem Gussverfahren, an dem Werkzeugtragarm ausgebildet sein. Hierdurch ist die Werkzeugkassette, insbesondere die Lagerstelle, mechanisch besonders robust und korrosionsfest.

Ein Gegen-Lagermittel für das zweite Tragmittel kann an dem zweiten Grundkörperteil ausgebildet sein. Beispielsweise kann das Lagermittel, insbesondere der Lagerbolzen, schwenkbar an dem zweiten Grundkörperteil befestigt sein.

Gemäß einem Aspekt der Erfindung sind das Lagermittel und/oder das Gegen-Lagermittel, insbesondere der jeweilige Lagerbolzen und/oder der Lagerkragen mit einem Verschleißschutz ausgebildet, insbesondere mit einer Beschichtung und/oder einer Hülse, insbesondere aufweisend ein Gleitlagermaterial, insbesondere Kupfer und/oder Zinn und/oder Blei und/oder PTFE.

Gemäß einem weiteren Aspekt der Erfindung kann mindestens eines der Lagermittel ein Wälzlager aufweisen.

Eine Werkzeugkassette nach Anspruch 6 ist besonders zuverlässig im Betrieb. Das mindestens eine Ausrichtmittel kann zum formschlüssigen Zusammenwirken mit dem jeweiligen Werkzeugteil, beispielsweise als Ausrichtbolzen, insbesondere als Justierpin, und/oder als Ausrichtvorsprung, ausgebildet sein. Vorzugsweise ist das mindestens eine Ausrichtmittel reversibel lösbar an dem Grundkörper angebracht, insbesondere an dem ersten und/oder an dem zweiten Grundkörperteil.

Eine Werkzeugkassette nach Anspruch 7 ist besonders zuverlässig im Betrieb. Vorzugsweise ist das mindestens eine Ausrichtmittel, insbesondere jeweils ein Ausrichtmittel, zum Ausrichten sämtlicher Werkzeugteile, relativ zu dem Grundkörper vorgesehen. Ein Bearbeitungswerkzeug kann somit besonderes zuverlässig, insbesondere in einem Werkzeugmagazin automatisiert, aus der Werkzeugkassette entnommen bzw. in die Werkzeugkassette eingesetzt werden.

Eine Werkzeugkassette nach Anspruch 8 ist besonders leicht und mechanisch robust. Hinterschneidungen ermöglichen Materialeinsparungen bzw. eine besonders hohe Festigkeit und Steifigkeit bei vorgegebenem Materialeinsatz. Vorzugsweise weist jedes Grundkörperteil Hinterschneidungen in jeder Raumrichtung auf.

Gemäß einem Aspekt der Erfindung sind Lagerstellen, insbesondere für die Lagerbolzen, und/oder Bohrungen und/oder Montagekontaktflächen entformungsschrägenfrei ausgebildet. Hierdurch kann die Anzahl erforderlicher Fertigungsschritte reduziert werden.

Eine Werkzeugkassette nach Anspruch 9 ist, insbesondere in geringen Stückzahlen, besonders wirtschaftlich herstellbar, leicht und mechanisch robust. Vorzugsweise ist der Grundkörper in einem Sinterverfahren, insbesondere in einem SLS-Verfahren, und/oder in einem SLA-Verfahren und/oder in einem FDM-Verfahren und/oder in einem Inkjet-Verfahren hergestellt. Beispielsweise kann der Grundkörper aus Polyamid, insbesondere aus PA2200, hergestellt sein. Das additive Fertigungsverfahren wird auch als 3D-Druckverfahren bezeichnet. Das erste und/oder das zweite Grundkörperteil können in dem additiven Fertigungsverfahren hergestellt sein. Der Grundkörper ist hierdurch besonders leicht und, insbesondere in einer geringen Stückzahl, wirtschaftlich herstellbar.

Eine Werkzeugkassette nach Anspruch 10 ist mechanisch besonders robust. Vorzugsweise bestehen der Grundkörper, insbesondere das erste und/oder das zweite Grundkörperteil, aus einem faserverstärkten Kunststoffmaterial.

Eine Werkzeugkassette nach Anspruch 11 weist einen breiten Einsatzbereich auf. Das dritte Tragmittel kann zum reversibel lösbaren Aufnehmen des Abstreifers und/oder des Niederhalters ausgebildet sein. Das dritte Tragmittel ist vorzugsweise einteilig und/oder starr mit dem ersten und/oder mit dem zweiten Grundkörperteil verbunden. Alternativ kann das dritte Tragmittel reversibel lösbar an dem ersten und/oder an dem zweiten Grundkörperteil angebracht sein und/oder mehrteilig ausgebildet sein. Vorzugsweise ist das dritte Tragmittel in einem additiven Fertigungsverfahren hergestellt.

Es ist ferner eine Aufgabe der Erfindung, eine verbesserte Kombination bereitzustellen, welche insbesondere besonders leicht, wirtschaftlich herstellbar und robust im Betrieb ist.

Diese Aufgabe wird durch eine Kombination mit den Merkmalen des Anspruchs 12 gelöst. Die Vorteile der Kombination entsprechen vorzugsweise den vorstehend in Zusammenhang mit der Werkzeugkassette beschriebenen Vorteilen. Vorzugsweise ist die Kombination mit mindestens einem der Merkmale weitergebildet, die vorstehend im Zusammenhang mit der Werkzeugkassette beschrieben sind. Das mindestens eine Werkzeugteil kann einen Stanz- und/oder Umformstempel, eine Stanz- und/oder Umformmatrize, einen Abstreifer und/oder einen Niederhalter umfassen. Die Werkzeugteile sind vorzugsweise reversibel und/oder werkzeuglos lösbar an der Werkzeugkassette, insbesondere an den mindestens zwei, insbesondere an den drei, Tragmitteln angebracht.

Die Kombination ist kann zum Einsetzen in ein Werkzeugmagazin einer Stanz- und/oder Umformvorrichtung ausgebildet sein.

Gemäß einem Aspekt der Erfindung umfasst die Kombination alle Werkzeugteile des mehrteiligen Bearbeitungswerkzeugs. Vorzugsweise sind sämtliche Werkzeugteile des Bearbeitungswerkzeugs an der Werkzeugkassette, insbesondere reversibel lösbar, angeordnet. Hierdurch kann ein Werkzeugwechsel besonders zeiteffizient und wirtschaftlich erfolgen.

Es ist eine weitere Aufgabe der Erfindung, ein verbessertes Set bereitzustellen, welches insbesondere besonders wirtschaftlich und flexibel im Einsatz ist.

Diese Aufgabe wird durch ein Set mit den Merkmalen des Anspruchs 13 gelöst. Die Vorteile des Sets entsprechen den vorstehend in Zusammenhang mit der Werkzeugkassette und/oder mit der Kombination beschriebenen Vorteilen. Vorzugsweise ist das Set mit mindestens einem Merkmal weitergebildet, die vorstehend in Zusammenhang mit der Werkzeugkassette und/oder mit der Kombination beschrieben sind. Das Alternativ-Grundkörperteil kann sich im Vergleich zu dem damit ausgetauschten ersten und/oder zweiten Grundkörperteil in der Geometrie und/oder in den mechanischen Eigenschaften unterscheiden. Das Alternativ-Grundkörperteil kann, insbesondere zum Anbringen eines alternativen Tragmittels, zum Aufnehmen eines anderen Werkzeugteils ausgebildet sein. Hierdurch wird die Einsatzflexibilität der Werkzeugkassette erhöht. Insbesondere können Herstell- und Bevorratungskosten aufgrund der hierdurch ermöglichten modularen Bauweise reduziert werden.

Weitere Merkmale, Vorteile und Einzelheiten der Erfindung ergeben sich aus der nachfolgenden Beschreibung eines Ausführungsbeispiels anhand der Figuren. Es zeigen:
- Fig. 1: eine perspektivische Darstellung einer Werkzeugkassette zum Tragen von Werkzeugteilen eines Bearbeitungswerkzeugs für eine Stanzvorrichtung,
- Fig. 2: eine Schnittdarstellung der Werkzeugkassette in der Fig. 1, wobei die Werkzeugkassette einen Grundkörper mit zwei reversibel lösbar miteinander verbundenen Grundkörperteilen aufweist,
- Fig. 3: eine perspektivische Darstellung der Werkzeugkassette in der Fig. 1,
- Fig. 4: eine Draufsicht auf die Werkzeugkassette der Fig. 1,
- Fig. 5: eine perspektivische Darstellung des ersten Grundkörperteils der Werkzeugkassette in der Fig. 1 mit einem daran angebrachten ersten Tragmittel zum reversibel lösbaren Aufnehmen eines ersten Werkzeugteils,
- Fig. 6: eine perspektivische Darstellung des ersten Grundkörperteils in der Fig. 5, bzw.
- Fig. 7: eine perspektivische Darstellung des zweiten Grundkörperteils der Werkzeugkassette in der Fig. 1 mit einem daran angebrachten zweiten Tragmittel zum reversibel lösbaren Aufnehmen eines zweiten Werkzeugteils.

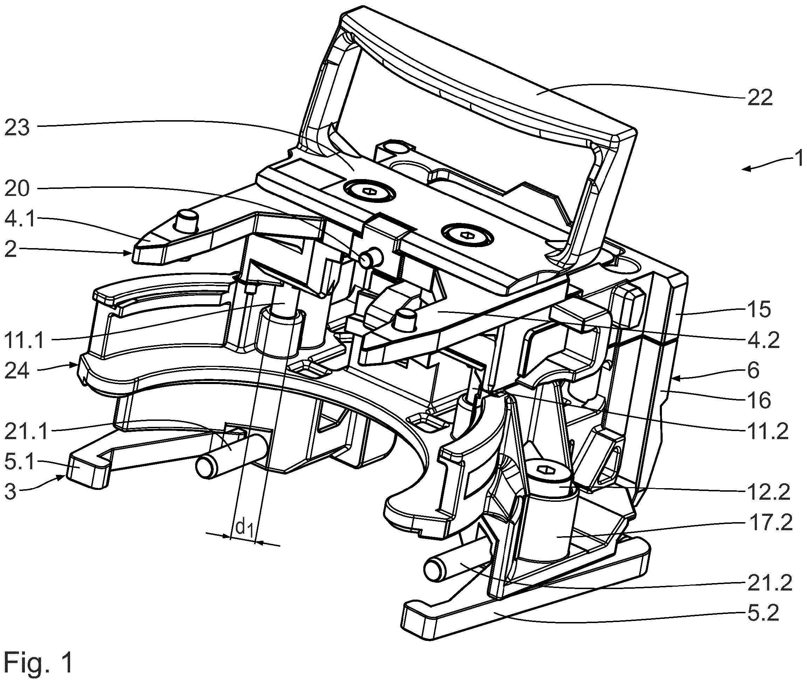

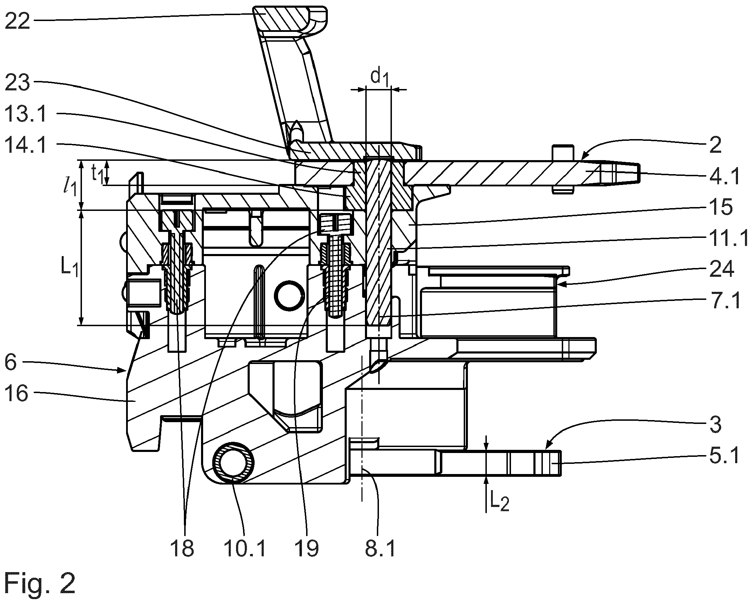

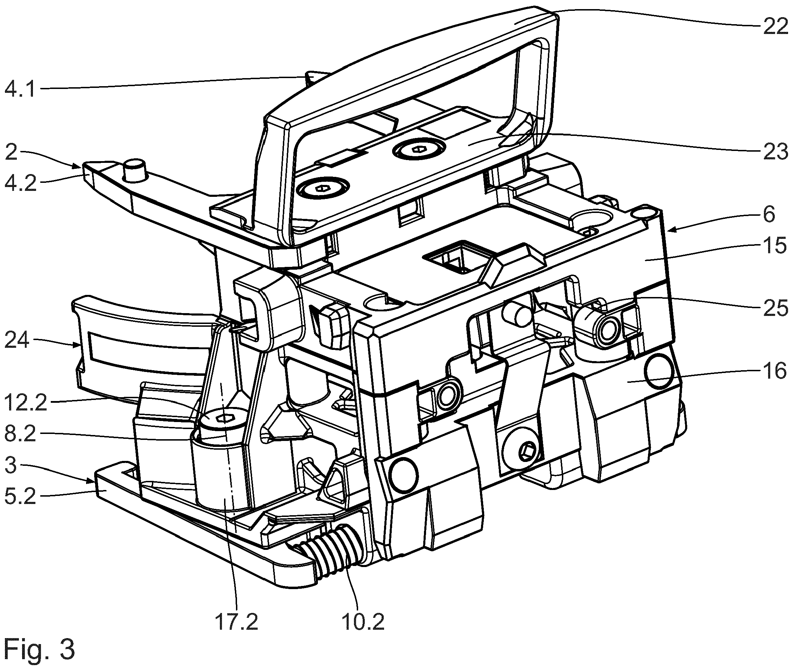

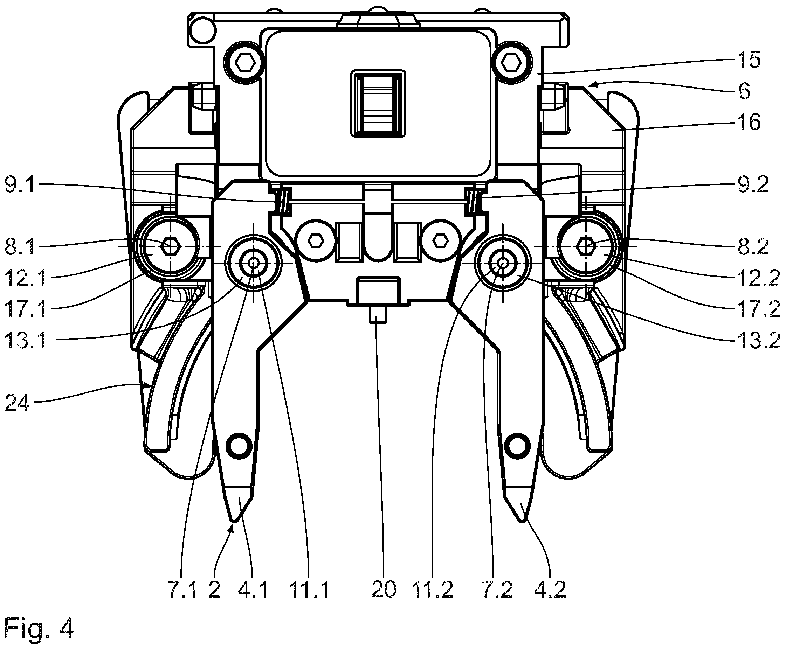

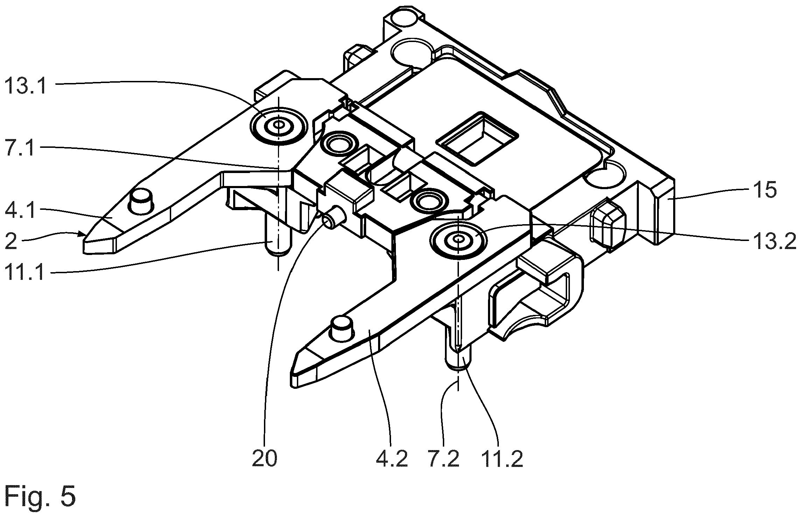

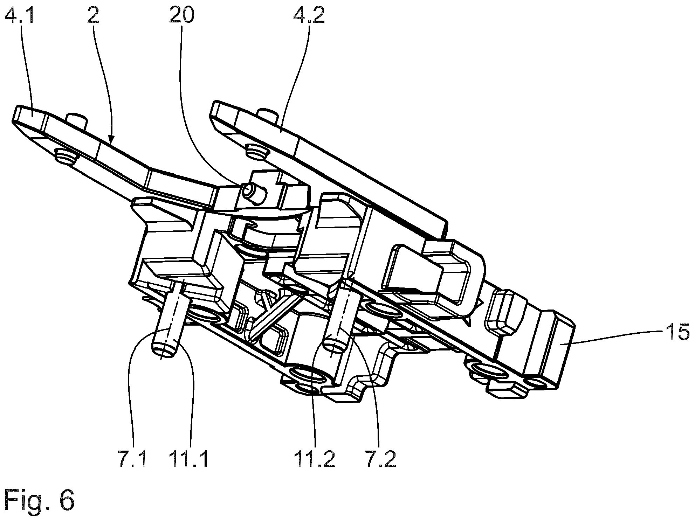

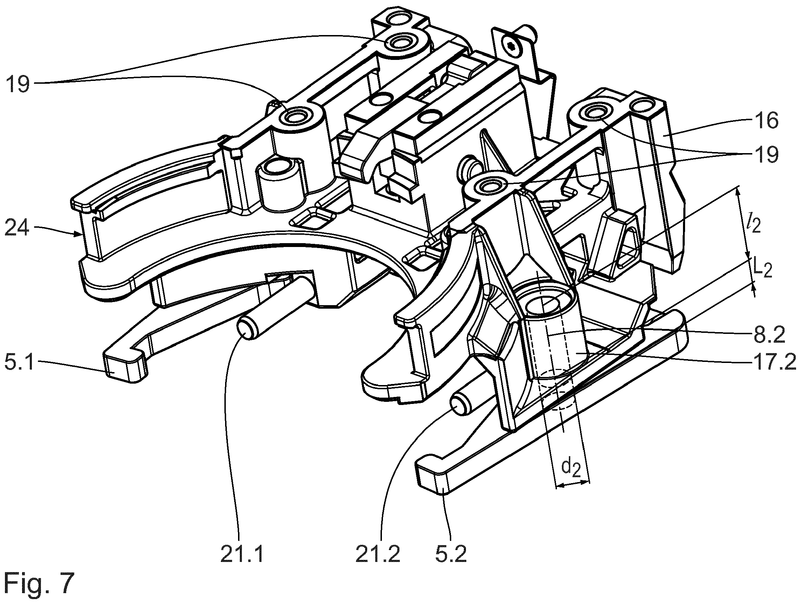

Anhand der Fig. 1 bis Fig. 7 ist eine Werkzeugkassette 1 zum Tragen von Werkzeugteilen, insbesondere eines mehrteiligen Bearbeitungswerkzeugs für eine Stanzvorrichtung und/oder für eine Umformvorrichtung, beschrieben. Die Werkzeugkassette 1 ist zum reversiblen Aufnehmen mindestens eines Werkzeugteils, insbesondere von mindestens zwei Werkzeugteilen, insbesondere von genau drei Werkzeugteilen, insbesondere eines Stempels und/oder einer Matrize und/oder eines Niederhalters und/oder eines Abstreifers, ausgebildet. Hierzu weist die Werkzeugkassette 1 ein erstes Tragmittel 2 und ein zweites Tragmittel 3 auf. Das erste Tragmittel 2 ist zum reversiblen Aufnehmen eines ersten Werkzeugteils, insbesondere eines Stanzstempels, ausgebildet. Das zweite Tragmittel ist zum reversiblen Aufnehmen eines zweiten Werkzeugteils, insbesondere einer Stanzmatrize, ausgebildet.

Das erste Tragmittel 2 weist zwei Werkzeugtragarme 4.1, 4.2 auf. Das zweite Tragmittel 3 weist zwei Werkzeugtragarme 5.1, 5.2 auf.

Die Werkzeugtragarme 4.1, 4.2, 5.1, 5.2 umfassen ein metallisches Material, insbesondere einen Edelstahl. Die Werkzeugtragarme 4.1, 4.2, 5.1, 5.2 können aus einem Blech- oder Plattenmaterial, insbesondere in einem Laser- oder Stanzverfahren, hergestellt sein.

Die Tragmittel 2, 3, insbesondere die Werkzeugtragarme 4.1, 4.2, 5.1, 5.2 sind zum Kontaktieren der an der Werkzeugkassette 1 aufgenommenen Werkzeugteile ausgebildet. Insbesondere umgreifen die Tragmittel 2, 3 das jeweilige Werkzeugteil zumindest abschnittsweise formschlüssig und/oder kraftschlüssig.

Die Werkzeugkassette 1 weist einen Grundkörper 6 auf. Die Tragmittel 2, 3 sind an dem Grundkörper 6 befestigt. Die Tragmittel 2, 3 sind relativ zu dem Grundkörper 6 schwenkbar gelagert. Insbesondere ist jeder der Werkzeugtragarme 4.1, 4.2, 5.1, 5.2 um jeweils eine Drehachse 7.1, 7.2, 8.1, 8.2 relativ zu dem Grundkörper 6 schwenkbar.

Die Werkzeugtragarme 4.1, 4.2, 5.1, 5.2 sind jeweils in eine Verschlussstellung vorgespannt. Die Vorspannkraft wird von Federelementen 9.1, 9.2, 10.1, 10.2 bereitgestellt, die jeweils zwischen dem Grundkörper 6 und einem der Werkzeugtragarme 4.1, 4.2, 5.1, 5.2 wirken. Die Federelemente 9.1, 9.2, 10.1, 10.2 können als Spiralfedern, insbesondere als Druckfedern, ausgebildet sein.

Zum schwenkbaren Lagern der Tragmittel 2, 3 sind Lagermittel 11.1, 11.2, 12.1, 12.2 vorgesehen. Die Lagermittel 11.1, 11.2, 12.1, 12.2 sind an dem Grundkörper 6 befestigt. Insbesondere sind die Lagermittel 11.1, 11.2, 12.1, 12.2 in der Form von Lagerbolzen bzw. Lagerstiften ausgebildet.

Vorzugsweise umfasst das mindestens eine Lagermittel 11.1, 11.2, 12.1, 12.2 einen Gleitlagerwerkstoff, insbesondere aufweisend Kupfer und/oder Zinn und/oder Blei und/oder PTFE und/oder Keramik, insbesondere besteht es daraus. Der Gleitlagerwerkstoff kann als Beschichtung oder in der Art eine Hülse ausgebildet sein. Die Hülse wird auch als Buchse bezeichnet.

Das erste Tragmittel 2, insbesondere die Werkzeugtragarme 4.1, 4.2 weisen jeweils ein Gegen-Lagermittel 13.1, 13.2, insbesondere eine Bohrung, zum Ausbilden der schwenkbaren Verbindung mit dem zugehörigen Lagermittel 11.1, 11.2 auf. Das jeweilige Gegen-Lagermittel 13.1, 13.2 kann einen Gleitlagerwerkstoff, insbesondere in Bereich der mindestens einen Hülse, aufweisen, insbesondere daraus bestehen.

Die Lagermittel 11.1, 11.2 zum Lagern des ersten Tragmittels 2 sind mit dem Grundkörper 6 starr verbunden. Die Werkzeugtragarme 4.1, 4.2 des ersten Tragmittel 2 sind relativ zu den Lagermittels 11.1, 11.2 und zu dem Grundkörper 6, insbesondere um die jeweilige Drehachse 7.1, 7.2, schwenkbar.

Das jeweilige Gegen-Lagermittel 13.1, 13.2 weist vorzugsweise einen Lagerkragen 14.1 auf. Der Lagerkragen 14.1 erhöht die Lagerlänge li des jeweiligen Werkzeugtragarms 4.1, 4.2 des ersten Tragmittels 2, insbesondere gegenüber einer Dicke t₁ der Werkzeugtragarme 4.1, 4.2, entlang der Drehachsen 7.1, 7.2. Der jeweilige Lagerkragen 14.1 kann durch eine, insbesondere kraftschlüssig und/oder stoffschlüssig, mit dem jeweiligen Werkzeugtragarm 4.1, 4.2 verbundene Hülse ausgebildet sein, insbesondere eine Hülse aus einer Aluminium-Bronze-Legierung. Alternativ kann der Lagerkragen 14.1 einteilig, insbesondere in einem Urformprozess, an dem Werkzeugtragarm 4.1, 4.2 ausgebildet sein. Die durch den Lagerkragen 14.1 bewirkte vergrößerte Lagerlänge li reduziert das Lagerspiel sowie Verschleiß und erhöht die Belastbarkeit des Schwenklagers.

Der Grundkörper 6 weist ein erstes Grundkörperteil 15 und ein zweites Grundkörperteil 16 auf. Eine Trennebene zwischen dem ersten Grundkörperteil 15 und dem zweiten Grundkörperteil 16 ist schräg, insbesondere im Wesentlichen senkrecht, zu den Drehachsen 7.1, 7.2, 8.1, 8.2 orientiert.

Die Lagermittel 11.1, 11.2 für das zweite Tragmittel sind mit dem ersten Grundkörperteil 15 starr verbunden, insbesondere verpresst und/oder verklebt. Insbesondere durchdringen die Lagermittel 11.1. 11.2 eine Durchgangsbohrung des ersten Grundkörperteils 15.

Die Lagermittel 11.1, 11.2 können, insbesondere zusätzlich zur Befestigung an dem ersten Grundkörperteil 15, an dem zweiten Grundkörperteil 16 befestigt sein, insbesondere in eine Bohrung, insbesondere in ein einseitig verschlossenes Sackloch, des zweiten Grundkörperteils 16 hineinragen. Hierdurch sind die Lagermittel 11.1, 11.2 über eine besonders große Befestigungslänge Li an dem Grundkörper 6 angebracht. Die zwischen dem jeweiligen Lagermittel 11.1, 11.2 und dem Grundkörper 6 wirkenden Kräfte sind hierdurch reduziert.

Ein Durchmesser di des jeweiligen Lagermittels 11.1, 11.2 liegt in einem Bereich von 4 mm bis 16 mm, insbesondere von 5 mm bis 12 mm, insbesondere beträgt dieser 6 mm.

Die Lagermittel 12.1, 12.2 für die zweiten Tragmittel 3 sind schwenkbar an Gegen-Lagermitteln 17.1, 17.2 gelagert. Die Gegen-Lagermittel 17.1, 17.2 sind durch den Grundkörper 6, insbesondere das zweite Grundkörperteil 16 gebildet, insbesondere einstückig mit diesem ausgebildet. Für eine robuste Lagerung liegt ein Durchmesser d₂ des jeweiligen Lagermittels 12.1, 12.2 in einem Bereich von 5 mm bis 16 mm, insbesondere von 6 mm bis 12 mm, insbesondere beträgt dieser 8 mm. Der Durchmesser d₂ ist vorzugsweise größer als der Durchmesser di. Die jeweils zwischen den Lagermitteln 12.1, 12.2 und den Gegen-Lagermitteln 17.1, 17.2 ausgebildete Lagerlänge l₂ kann größer sein als die Lagerlänge l₁. Die Lagermittel 12.1, 12.2 für das zweite Tragmittel 3 sind über eine Befestigungslänge L₂ starr mit den Werkzeugtragarmen 5.1, 5.2 verbunden.

Der Grundkörper 6 besteht aus einem Kunststoffmaterial, insbesondere einem in einem additiven Fertigungsverfahren verarbeitbaren Kunststoffmaterial, insbesondere PA, insbesondere PA2200, PLA, ABS, PEEK, PET, PVA und/oder PP. Vorzugsweise ist der Grundkörper 6 in einem additiven Verfahren, insbesondere in einem SLS-Verfahren, in einem SLA-Verfahren, in einem FDM-Verfahren und/oder Inkjet-Verfahren hergestellt. Das erste Grundkörperteil 15 und/oder das zweite Grundkörperteil 16 sind vorzugsweise mit demselben Fertigungsverfahren hergestellt.

Der Grundkörper 6, insbesondere das erste Grundkörperteil 15 und/oder das zweite Grundkörperteil 16, umfasst vorzugsweise ein faserverstärktes Material, insbesondere einen faserverstärkten Kunststoff, insbesondere besteht dieser daraus.

Das erste Grundkörperteil 15 und das zweite Grundkörperteil 16 sind reversibel lösbar miteinander verbunden, insbesondere kraftschlüssig und/oder formschlüssig, insbesondere mittels mindestens einer Schraube 18. Für eine besonders robuste Verbindung sind in das erste Grundkörperteil 15 und/oder in das zweite Grundkörperteil 16 Gewindeeinsätze 19 eingebracht zum Verbinden des ersten Grundkörperteils 15 mit dem zweiten Grundkörperteil 16.

Die Werkzeugkassette 1 weist, insbesondere an dem ersten Grundkörperteil 15, ein erstes Ausrichtmittel 20 auf. Das erste Ausrichtmittel 20 ist zum Festlegen einer Orientierung des an dem ersten Tragmittel 2 angeordneten Werkzeugteils relativ zu dem Grundkörper 6, insbesondere in der Form eines Ausrichtstiftes, ausgebildet. Das erste Ausrichtmittel 20 ist für eine erleichterte Instandhaltung der Werkzeugkassette 1 auswechselbar, insbesondere zerstörungsfrei lösbar, an dem Grundkörper 6, insbesondere an dem ersten Grundkörperteil 15, angebracht.

Die Werkzeugkassette 1 weist ein zweites Ausrichtmittel 21 zum Festlegen einer Orientierung des zweiten Werkzeugteils relativ zu dem Grundkörper 6 auf. Das zweite Ausrichtmittel 21 umfasst beispielsweise zwei Ausrichtbolzen 21.1, 21.2, die in jeweils einer Bohrung des zweiten Grundkörperteils 16 kraftschlüssig, insbesondere einer Presspassung, gehalten sein können.

Die Werkzeugkassette 1 umfasst ferner einen Handgriff 22 zum Tragen der Werkzeugkassette 1 mit der Hand.

Mittels eines Verschlussteils 23 ist das erste Tragmittel 2, insbesondere sind die Werkzeugtragarme 4.1, 4.2, formschlüssig an dem ersten Grundkörperteil 15 gehalten. Insbesondere ist das Tragmittel 2 zwischen dem Verschlussteil 23 und dem ersten Grundkörperteil 15 entlang der Drehachsen 7.1, 7.2 fixiert.

Das Verschlussteil 23 ist einteilig mit dem Handgriff 22 ausgebildet. Insbesondere können das Verschlussteil 23 und der Handgriff 22 aus demselben Material und/oder in demselben Fertigungsverfahren hergestellt sein, wie das erste Grundkörperteil 15 und/oder das zweite Grundkörperteil 16.

Die Werkzeugkassette 1 weist ein drittes Tragmittel 24 auf. Das dritte Tragmittel 24 ist zum Aufnehmen des Abstreifers und/oder des Niederhalters ausgebildet. Das dritte Tragmittel 24 ist vorzugsweise als Starrkörper, insbesondere ohne bewegliche Teile, ausgebildet. Das dritte Tragmittel 24 ist einstückig mit dem zweiten Grundkörperteil 16 ausgebildet. Alternativ kann das dritte Tragmittel 24 reversibel lösbar mit dem Grundkörper 6, insbesondere mit dem zweiten Grundkörperteil 16, verbunden sein.

Der Grundkörper 6, insbesondere das erste Grundkörperteil 15 und/oder das zweite Grundkörperteil 16, weisen Hinterschneidungen in jede Richtung schräg, insbesondere senkrecht, zu den Drehachsen 7.1, 7.2, 8.1, 8.2, insbesondere in jede Raumrichtung, auf. Hierdurch kann die Werkzeugkassette 1 insbesondere leicht und dennoch robust und starr ausgebildet sein. Eine entsprechende Bauweise wird insbesondere durch eines der vorgenannten additiven Fertigungsverfahren ermöglicht.

Die Werkzeugkassette 1 umfasst eine Kopplungseinrichtung 25 zum reversibel lösbaren Befestigen der Werkzeugkassette 1 an der Stanz- und/oder Umformvorrichtung, insbesondere an einem Werkzeugmagazin.

Eine nicht dargestellte Kombination umfasst die Werkzeugkassette 1 mit mindestens einem daran aufgenommenen Werkzeugteil, insbesondere mit einem vollständig daran aufgenommenen Bearbeitungswerkzeug mit mehreren Werkzeugteilen, insbesondere dem Stempel und/oder der Matrize und/oder dem Abstreifer und/oder dem Niederhalter.

Ein nicht dargestelltes Set umfasst die Werkzeugkassette 1 und mindestens ein Alternativ-Grundkörperteil zum reversiblen Austausch mit dem ersten Grundkörperteil 15 und/oder dem zweiten Grundkörperteil 16. Hierdurch ist die Werkzeugkassette 1 besonders wirtschaftlich instandhaltbar und flexibel im Einsatz, insbesondere zur Verwendung mit unterschiedlichen Bearbeitungswerkzeugen geeignet.

Die Funktionsweisen der Werkzeugkassette 1, des Sets bzw. der Kombination sind wie folgt:
Das Bearbeitungswerkzeug wird an der Werkzeugkassette 1 bereitgestellt. Die Werkzeugkassette 1 ist vollständig montiert, insbesondere ist das erste Grundkörperteil 15 mit dem zweiten Grundkörperteil 16 verbunden. Die Tragmittel 2, 3 befinden sich in der Verschlussstellung.

Die Werkzeugteile des Bearbeitungswerkzeugs, insbesondere der Stanzstempel, die Stanzmatrize und der Abstreifer, werden an dem ersten Tragmittel 2, dem zweiten Tragmittel 3 und dem dritten Tragmittel 24 angebracht. Hierzu werden die Werkzeugteile von der Vorderseite, insbesondere in Richtung senkrecht zu den Drehachsen 7.1, 7.2, 8.1, 8.2 nach hinten verlagert, insbesondere in Längsrichtung der Werkzeugtragarme 4.1, 4.2, 5.1, 5.2. Der Kontakt mit dem jeweiligen Werkzeugteil bewirkt ein Schwenken der Werkzeugtragarme 4.1, 4.2, 5.1, 5.2 in eine Offenstellung, insbesondere entgegen der von den Federelementen 9.1, 9.2, 10.1, 10.2 bewirkten Vorspannkraft. Zugleich sorgen die Ausrichtmittel 20, 21 dafür, dass die Bearbeitungswerkzeuge nur in einer einzigen, vorbestimmten Orientierung zu dem Grundkörper 6 in die Werkzeugkassette 1 einsetzbar sind. Hierzu greifen die Ausrichtmittel 20, 21 in entsprechende Gegen-Ausrichtmittel der Werkzeugteile ein.

Die Werkzeugteile sind vollständig in die Werkzeugkassette 1 eingerückt. Die Tragmittel 2, 3, insbesondere die Werkzeugtragarme 4.1, 4.2, 5.1, 5.2, sind, bewirkt durch die Federelemente 9.1, 9.2, 10.1, 10.2, in die Verschlussstellung verlagert. Das Bearbeitungswerkzeug ist in der Werkzeugkassette 1 aufgenommen.

Die Kombination, umfassend die Werkzeugkassette 1 und das Bearbeitungswerkzeug, kann zum Bearbeiten eines Werkstücks in das Werkzeugmagazin der Stanz- und/oder Umformvorrichtung eingesetzt werden.

Das Set, umfassend die Werkzeugkassette 1 und das Alternativ-Grundkörperteil ist besonders flexibel und wirtschaftlich im Einsatz. Durch die Austauschbarkeit des ersten und/oder des zweiten Grundkörperteils 15, 16 durch das Alternativ-Grundkörperteil anderer Beschaffenheit können unterschiedliche Bearbeitungswerkzeuge, insbesondere mit unterschiedlichen Geometrien und/oder Funktionen, an der Werkzeugkassette 1 aufgenommen werden.

Der zweiteilige Aufbau des Grundkörpers 6 ermöglicht eine besonders unkomplizierte und wirtschaftliche Montage und Instandhaltung der Werkzeugkassette 1. Aufgrund der Fertigung des Grundkörpers 6 in dem additiven Fertigungsverfahren ist die Formgebung des Grundkörpers 6 besonders flexibel möglich, wodurch der Grundkörper 6, trotz der bei einem derartigen Fertigungsverfahren begrenzten Werkstoffauswahl, besonders leicht und zugleich robust ausgebildet werden kann. Die zweiteilige Ausbildung des Grundkörpers 6 erhöht zudem die Einsatzflexibilität der Werkzeugkassette 1. Die Werkzeugkassette 1 ist besonders leicht, wirtschaftlich herstellbar sowie robust und flexibel im Betrieb.

## Patentansprüche

1. Werkzeugkassette (1) zum Tragen von Werkzeugteilen, insbesondere eines mehrteiligen Bearbeitungswerkzeugs für eine Stanz- und/oder Umformvorrichtung, aufweisend
1.1 einen Grundkörper (6),
1.2 ein an dem Grundkörper (6) angebrachtes erstes Tragmittel (2) zum reversibel lösbaren Aufnehmen eines ersten Werkzeugteils, und
1.3 ein an dem Grundkörper (6) angebrachtes zweites Tragmittel (3) zum reversibel lösbaren Aufnehmen eines zweiten Werkzeugteils,
**dadurch gekennzeichnet, dass**
1.4 der Grundkörper (6) zweiteilig ausgebildet ist, wobei an einem ersten Grundkörperteil (15) das erste Tragmittel (2) angeordnet ist und an einem zweiten Grundkörperteil (16) das zweite Tragmittel (3) angeordnet ist.

2. Werkzeugkassette (1) nach Anspruch 1, **dadurch gekennzeichnet, dass** das erste Grundkörperteil (15) mit dem zweiten Grundkörperteil (16) reversibel lösbar verbunden ist.

3. Werkzeugkassette (1) nach Anspruch 1 oder 2, **gekennzeichnet durch** mindestens ein an beiden Grundkörperteilen (15, 16) angebrachtes Lagermittel (11.1, 11.2) zum schwenkbaren Lagern des ersten und/oder des zweiten Tragmittels (2, 3) an dem Grundkörper (6).

4. Werkzeugkassette (1) nach Anspruch 3, **dadurch gekennzeichnet, dass** das mindestens eine Lagermittel (11.1, 11.2) als starr mit dem Grundkörper (6) verbundener Lagerbolzen ausgebildet ist.

5. Werkzeugkassette (1) nach einem der vorstehenden Ansprüche, **dadurch gekennzeichnet, dass** das mindestens eine Tragmittel (2) ein Gegen-Lagermittel (13.1, 13.2) mit einem Lagerkragen (14.1) aufweist.

6. Werkzeugkassette (1) nach einem der vorstehenden Ansprüche, **dadurch gekennzeichnet, dass** an dem Grundkörper (6) mindestens ein Ausrichtmittel (20, 21) zum Festlegen einer Ausrichtung des mindestens einen Werkzeugteils relativ zu dem Grundkörper (6) angeordnet ist.

7. Werkzeugkassette (1) nach Anspruch 6, **gekennzeichnet durch** jeweils mindestens ein Ausrichtmittel (20, 21) an dem ersten und an dem zweiten Grundkörperteil (15, 16).

8. Werkzeugkassette (1) nach einem der vorstehenden Ansprüche, **dadurch gekennzeichnet, dass** der Grundkörper (6) Hinterschneidungen in jede Raumrichtung aufweist.

9. Werkzeugkassette (1) nach einem der vorstehenden Ansprüche, **dadurch gekennzeichnet, dass** der Grundkörper (6) in einem additiven Fertigungsverfahren hergestellt ist.

10. Werkzeugkassette (1) nach einem der vorstehenden Ansprüche, **dadurch gekennzeichnet, dass** der Grundkörper (6) ein, insbesondere faserverstärktes, Kunststoffmaterial aufweist.

11. Werkzeugkassette (1) nach einem der vorstehenden Ansprüche, **gekennzeichnet durch** ein einteilig mit dem ersten oder mit dem zweiten Grundkörperteil (15, 16) ausgebildetes drittes Tragmittel (24) zum reversibel lösbaren Aufnehmen eines dritten Werkzeugteils.

12. Kombination, aufweisend
12.1 eine Werkzeugkassette (1) nach einem der vorstehenden Ansprüche, und
12.2 mindestens ein Werkzeugteil, insbesondere eines mehrteiligen Bearbeitungswerkzeugs für eine Stanz- oder Umformvorrichtung, an der Werkzeugkassette (1).

13. Set, aufweisend
13.1 eine Werkzeugkassette (1) nach einem der Ansprüche 1 bis 12, und
13.2 mindestens ein Alternativ-Grundkörperteil zum reversiblen Austausch mit dem ersten und/oder mit dem zweiten Grundkörperteil (15, 16), das zum Tragen eines anderen Werkzeugteils eine andere Beschaffenheit aufweist, als das damit ausgetauschte erste und/oder zweite Grundkörperteil (15, 16).
